(19) Europäisches Patentamt
European Patent Office
Office européen des brevets

(11) **EP 2 424 766 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(21) Anmeldenummer: **10702093.5**

(22) Anmeldetag: **27.01.2010**

(51) Int Cl.:
**B62D 5/00** *(2006.01)*  **B62D 5/04** *(2006.01)*
**B62D 6/00** *(2006.01)*

(86) Internationale Anmeldenummer:
**PCT/EP2010/050894**

(87) Internationale Veröffentlichungsnummer:
**WO 2010/124883 (04.11.2010 Gazette 2010/44)**

(54) **EINSTELLEN EINES RADLENKWINKELS UND EINES HANDMOMENTS IN EINER LENKVORRICHTUNG**

ADJUSTMENT OF A WHEEL STEERING ANGLE AND A MANUAL MOMENT IN A STEERING SYSTEM

RÉGLAGE D'UN ANGLE DE BRAQUAGE DE ROUE ET D'UN COUPLE MANUEL DANS UN SYSTÈME DE DIRECTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.04.2009 DE 102009002704**

(43) Veröffentlichungstag der Anmeldung:
**07.03.2012 Patentblatt 2012/10**

(73) Patentinhaber: **ZF-Lenksysteme GmbH**
**73527 Schwäbisch Gmünd (DE)**

(72) Erfinder: **GRÜNER, Stefan**
**71549 Auenwald (DE)**

(56) Entgegenhaltungen:
**EP-A2- 1 568 577       WO-A1-2008/041668**
**WO-A2-2006/018027      US-A1- 2006 122 751**

**Beschreibung**

Die Erfindung betrifft ein Verfahren zum Einstellen eines Radlenkwinkels und eines Handmoments bei einer Lenkung für ein Fahrzeug, wobei ein Soll-Radienkwinkel und ein Soll-Handmoment vorgegeben werden und mittels eines Winkelstellers und eines Momentenstellers der vorgegebene Soll-Radlenkwinkel und das vorgegebene Soll-Handmoment eingeregelt werden.

Die Erfindung betrifft auch ein Steuergerät zur Steuerung/Regelung einer Lenkung in einem Fahrzeug, wobei die Lenkung einen Winkelsteller und einen Momentensteller aufweist und wobei das Steuergerät Mittel zum Ansteuern des Winkelstellers und des Momentenstellers und Mittel zum Einregeln eines Handmoments und eines Radlenkwinkel in Abhängigkeit von einem Soll-Radlenkwinkel und einem Soll-Handmoment aufweiset.

Die Erfindung betrifft ferner ein Computerprogramm, das auf einem Steuergerät zur Steuerung und/oder Regelung einer Lenkung, insbesondere auf einem Mikroprozessor in dem Steuergerät, ablauffähig ist.

Bei modernen Lenkungen, beispielsweise bei einer elektrischen Servolenkung oder bei einem so genannten Steer-by-Wire (SbW) Lenksystem, wird ein als Handmoment bezeichnetes Kraftniveau ermittelt, das an einem Lenkrad anliegen soll und der von dem Fahrer aufgebrachten Kraft entgegenwirkt oder die von dem Fahrer aufgebrachte Kraft verstärkt. Damit wird dem Fahrer ein der aktuellen Fahrsituation entsprechendes Fahrgefühl vermittelt, beispielsweise werden Informationen über die aktuelle Fahrbahnbeschaffenheit über das Lenkrad an den Fahrer zurückgemeldet. Ferner wird in Abhängigkeit von dem Handmoment dem Fahrer eine entsprechende Momentenunterstützung bereitgestellt.

In einer aktiven Lenkung ist ferner ein Winkelsteller vorhanden, mittels dessen das Verhältnis von Lenkradwinkel zu Radlenkwinkel durch Einbringen eines Überlagerungswinkels verändert werden kann. Damit kann ein Wunschradlenkwinkel mit Hilfe des Überlagerungswinkels eingestellt werden, beispielsweise um in kritischen Situationen ein Schleudern zu verhindern oder um das Übersetzungsverhältnis der Lenkung in Abhängigkeit von einer aktuellen Geschwindigkeit zu verändern. Insbesondere wenn eine mechanische Verbindung von dem Lenkrad zu den gelenkten Rädern besteht, hat eine Veränderung des Radlenkwinkels eine Auswirkung auf das Handmoment. Um diese Auswirkung einer so genannten Momentenabstützung durch den Winkelsteller zu kompensieren, ist es bekannt, das mittels des Momentenstellers erzeugte Handmoment entsprechend anzupassen.

Eine derart realisierte Verkopplung der Funktionalität einer elektrischen Lenkung (EPS) mit der Funktionalität eines aktiven Lenksystems (AFS) resultiert in einer Mehrwertfunktionalität, die mit der eines SbW-Systems vergleichbar ist, da mittels des EPS eine aktive kinetische Entkopplung realisierbar ist und mittels des AFS eine kinematische Entkopplung erreicht werden kann. Die so realisierbare SbW-Funktionalität impliziert eine unabhängige Vorgabe von Lenkradmoment und Radlenkwinkel.

Dies hat jedoch den Nachteil, dass die notwendige Kompensation der Momentenabstützung häufig zeitverzögert und ungenau erfolgt. Ferner ist eine derartige Kompensation energieaufwändig, da die Kompensation dadurch erreicht wird, dass die mittels des Momentenstellers und des Winkelstellers erzeugten Momente einander teilweise entgegenwirken. Ferner kann eine zufrieden stellende Einregelung des Lenkmoments und es Radlenkwinkels meist nicht oder nur äußerst aufwändig erreicht werden, da das Moment zum Einstellen des Radlenkwinkels stets das Handmoment beeinflusst und das zur Einstellung des Handmoments erzeugte Moment stets den Radienkwinkel beeinflusst. Diese Nachteile treffen auch auf aus dem Stand der Technik bekannte System zu, bei denen mittels des EPS-Momentenstellers der Radlenkwinkel und mittels des AFS-Winkelstellers ein Fahrerhandmoment eingestellt wird.

Regelungstechnische Analysen haben gezeigt, dass die bekannten Lösungsansätze zum Kompensieren der Momentenabstützung sehr sensibel auf weitere das System beeinflussende Größen, wie beispielsweise eine Seitenführungskraft oder eine Lenkgeschwindigkeit reagieren, weshalb die bekannten Systeme oft nicht eine zufriedenstellende Kompensation beziehungsweise ein zufriedenstellendes Handmoment realisieren können.

US 2006/0122751 A1 betrifft eine Lenkvorrichtung, bei der das Lenkrad mechanisch entkoppelt von den gelenkten Rädern angeordnet ist.

EP 1 568 577 A2 betrifft ein Lenksystem für ein Kraftfahrzeug und ein Verfahren zum Betrieb des Lenksystems. Es wird eine kinematische Beziehung zwischen drei Winkeln des Lenksystems, nämlich Lenkradwinkel, Zusatzwinkel und Drehzahlwinkel ermittelt.

Die WO 2006/018027 A2 betrifft ein System einer Fernlenkung mit einem bewegbaren Eingabegerät und einem von dem bewegten Eingabegerät beeinflussten Gerät.

Die WO 2008/041668 A1 betrifft ein Lenksystem für ein Fahrzeug mit einem variablen Übersetzungsverhältnis zwischen einer ersten Welle und einer zweiten Welle. Des Weiteren wird ein Unterstützungsmoment erzeugt.

Es ist Aufgabe der vorliegenden Erfindung eine Betriebsweise für eine Lenkung bereitzustellen, die möglichst unempfindlich gegenüber äußeren Einflüssen ist und dabei die für den Winkelsteller und den Momentensteller notwendige Stellenergie für die Einstellung eines Soll-Radlenkwinkels und eines Soll-Handmoments möglichst effizient nutzt.

Die Aufgabe wird durch ein Verfahren der eingangs genannten Art dadurch gelöst, dass der Soll-Radlenkwinkel und das Soll-Handmoment einem Mehrgrößenregler zugeführt werden und das Handmoment und der Radlenkwinkel mittels dieses Mehrgrößenreglers eingeregelt werden.

Das erfindungsgemäße Verfahren ermöglicht es damit, die Stellsignale für den Winkelsteller und den Momentensteller nicht unabhängig von einander sondern gemeinsam zu betrachten. Durch die Verwendung eines Mehrgrößenreglers wird folglich nicht - wie bei den bekannten Verfahren - jedem der Steller explizit eine Aufgabe zugewiesen, sondern es wird der Mehrgrößencharakter der Kombinatioin aus Winkelsteller und Momentensteller berücksichtigt. Dadurch wird erreicht, dass die Auswirkungen eines Stellers auf den jeweils anderen Steller nicht explizit kompensiert werden müssen, was regelmäßig eine Ineffizienz bedingt, da die Steller zeitweilig gegeneinander arbeiten. Mittels des Mehrgrößenreglers ist es möglich, die gegenseitigen negativen Störeffekte der Steller aufeinander zu reduzieren und die Steller derart anzusteuern, dass diese Wechselwirkungen kompensiert werden bzw. die Wechselwirkungen selbst möglichst minimiert werden.

Der Mehrgrößenregler berechnet aus dem aktuell gemessenen Lenkmoment, dem vorgegebenen Soll-Lenkmoment, einem aktuell gemessenen Radlenkwinkel und dem Soll-Radlenkwinkel die entsprechenden Stellsignale für den Momentensteller und den Winkelsteller.

Vorzugsweise sind die Stellsignale als Rotonminkel, Motormoment oder eine elektrische Spannung realisiert. Mittels derartiger Stellsignale können Winkelsteller und Momentensteller besonders vorteilhaft angesteuert werden, da insbesondere bekannte Winkelsteller und Momentensteller unverändert verwendet werden können.

In einer besonders vorteilhaften Ausführungsform ist der Mehrgrößenregler von vollem Rang. Dies bedeutet, dass jede Eingangsgröße in den Mehrgrößenregler Auswirkungen auf jede Komponente der Ausgangsgröße haben kann. Bei einem derartigen Mehrgrößenregler kann folglich jede Eingangsgröße für sich, also das Lenkmoment, das Soll-Lenkmoment, der aktuelle Radlenkwinkel und der Soll-Radlenkwinkel, Auswirkungen sowohl auf den Momentensteller als auch auf den Winkelsteller haben. Dies ermöglicht eine Regelung, die möglichst unempfindlich gegenüber unsicheren Parametern ist. Ferner wird dadurch erreicht, dass die zur Verfügung gestellten Stellgrößen effizient genutzt werden, da durch den vollen Rang Synergieeffekte der beiden Stellgrößen optimal genutzt werden können.

Vorzugsweise wird der Mehrgrößenregler mittels einer Gleichung der Form

$$x_{k+1} = Ax_k + Bu_k$$

$$y_k = Cx_k + Du_k$$

realisiert, wobei

$k$ einen Zeitpunkt beschreibt,

$x_k$ einen internen Zustand des Reglers mittels eines Vektors beschreibt,

$y_k$ die zu dem Zeitpunkt $k$ von dem Regler bestimmten Stellsignale beschreibt,

$u_k$ die Reglereingangsgrößen mittels eines Vektors beschreibt,

$A$, $B$, $C$ und $D$ Matrizen sind, mittels derer eine Parameterisierung des Reglers erfolgt.

Diese Form eines Mehrgrößenreglers ermöglicht einen besonders effizienten Entwurf des Mehrgrößenreglers, da hier die Reglermatrizen $A$, $B$, $C$ und $D$ mittels bekannter Entwurfmethoden für robuste Mehrgrößenregler bestimmbar sind. Die so entworfenen Mehrgrößenregler haben im Allgemeinen sogar vollen Rang.

Die Aufgabe wird auch durch ein Steuergerät der eingangs genannten Art dadurch gelöst, dass das Steuergerät Mittel zur Durchführung des erfindungsgemäßen Verfahren aufweist.

Von besonderer Bedeutung ist die Realisierung des erfindungsgemäßen Verfahrens in Form eines Computerprogramms, das auf einem Steuergerät zur Steuerung/Regelung einer Lenkung in einem Fahrzeug und insbesondere auf einem Mikroprozessor in dem Steuergerät ablauffähig ist und zur Ausführung des erfindungsgemäßen Verfahrens programmiert ist. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm programmiert ist. Das Computerprogramm ist vorzugsweise auf einem Speicherelement abgespeichert. Als Speicherelement kann insbesondere ein optisches, elektrisches oder magnetisches Speichermedium zur Anwendung kommen, beispielsweise eine Digital Versatile Disc (DVD), eine Festplatte (Harddisc), ein Random-Access-Speicher, ein Read-Only-Speicher oder ein Flash-Speicher.

Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden. Es zeigen:

Figur 1      eine schematische Darstellung einer Lenkung in einem Fahrzeug mit einem erfindungsgemäßen Steuergerät;

Figur 2    eine schematische Darstellung der Amplitudenverhältnisse der Eingangsgrößen und der Ausgangsgrößen bei einer Ausuhrungsform der erfindungsgemäßen Lenkung.

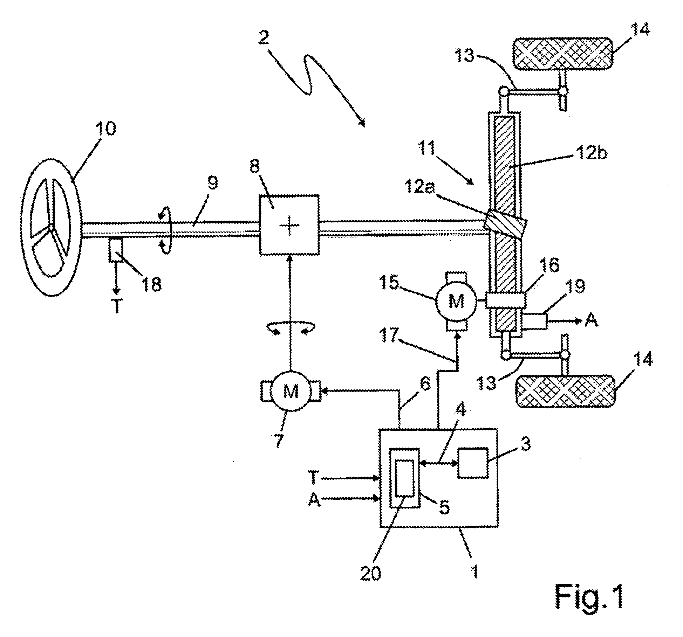

In Figur 1 ist ein Steuergerät 1 dargestellt, das einer Lenkung 2 zugeordnet ist. In dem Steuergerät 1 ist ein Mikroprozessor 3 angeordnet, der über eine Datenleitung 4, beispielsweise ein Bussystem, mit einem Speicherelement 5 verbunden ist. Über eine erste Signalleitung 6 ist das Steuergerät 1 mit einem als Motor ausgebildeten Winkelsteller 7 verbunden, so dass eine Steuerung und/oder Regelung des Motors bzw. des Winkelstellers 7 durch das Steuergerät 1 ermöglicht wird. Der Motor ist beispielsweise als Elektromotor ausgebildet und wirkt über ein Getriebe 8 auf einen Drehstab 9. An dem Drehstab 9 ist ein Lenkmittel, beispielsweise ein Lenkrad 10 angeordnet.

Die Lenkung 2 weist ferner ein Lenkgetriebe 11 auf, das beispielsweise als Zahnstangenlenkgetriebe ausgebildet ist. Das Lenkgetriebe 11 kann ebenso als Kugelumlaufgetriebe beziehungsweise als Kugelmuttergetriebe ausgebildet sein. In der folgenden Beschreibung wird überwiegend von einer Zahnstangenlenkung ausgegangen, wobei das Lenkgetriebe ein Ritzel 12a und eine Zahnstange 12b umfasst.

Das Lenkgetriebe 11 ist über das Ritzel 12a und die Zahnstangen 12b auf jeder Fahrzeugseite mit einem Lenkgestänge 13 verbunden, das jeweils mit einem Rad 14 zusammenwirkt.

Die Lenkung 2 weist ferner einen beispielsweise mittels eines zweiten Motors realisierten Momentensteller 15 auf, der über ein Getriebe 16 auf die Zahnstange 12b wirkt. Der Motor bzw. der Momentensteller 15 ist über eine zweite Datenleitung 17 mit dem Steuergerät 1 verbunden.

Die Lenkung 2 weist außerdem einen Momentensensor 18 zur Erfassung eines Handmoments T und einen Winkelsensor 19 zur Erfassung eines Radlenkwinkels A auf. Der Winkelsensor 19 ist insbesondere derart angeordnet, dass ein Summenwinkel, der sich aus dem Überlagungswinkel und dem Lenkradwinkel ergibt, erfasst werden kann.

Das mittels des Momentensensors 18 ermittelte Handmoment T und der mittels des Winkelsensors 19 erfasste Radlenkwinkel A werden dem Steuergerät 1 zugeführt.

Die in Figur 1 dargestellte Lenkung 2 stellt eine von einer Vielzahl möglicher Ausführungsformen von für die Durchführung des erfindungsgemäßen Verfahrens geeigneten Lenkvorrichtungen dar. Andere Ausführungsformen können beispielsweise durch andere Lenkgetriebe oder durch eine andere Anordnung der Motoren bzw. des Winkelstellers 7 und des Momentenstellers 15 ausgeführt sein. Ferner können die Sensoren 18 und 19 an anderen Stellen angeordnet sein. Beispielsweise ist es vorstellbar, an jedem der Motoren einen Winkelsensor anzuordnen und die so erfassten Winkelwerte an das Steuergerät 1 zu übermitteln, das dann aus diesen zugeführten Winkelwerten einen Summenwinkel bildet.

In dem Steuergerät 1 ist ein Mehrgrößenregler 20 ausgebildet, der beispielsweise in Form eines Computerprogramms realisiert ist und in einem Bereich des Speicherelements 5 abgespeichert ist. Zur Durchführung des erfindungsgemäßen Verfahrens wird das den Mehrgrößenregler 20 realisierende Computerprogramm dann auf dem Mikroprozessor 3 ausgeführt. Bei der Ausführung erhäft der Mehrgrößenregler 20 als Eingabe ein Soll-Lenkmoment, einen Soll-Radlenkwinkel, ein aktuelles Handmoment T, das beispielsweise mittels des Sensors 18 erfasst worden ist und einen aktuell erfassten Radlenkwinkel A, der beispielsweise mittels des Sensors 19 erfasst worden ist.

In Abhängigkeit von den Eingangsgrößen bestimmt der Mehrgrößenregler 20 zumindest zwei Stellgrößen, die über die Datenleitungen 6 beziehungsweise 17 an die Motoren bzw. an den Winkelsteller 7 und an den Momentensteller 15 übermittelt werden und eine Ansteuerung der Motoren ermöglichen, um das Soll-Lenkmoment, und den Soll-Radlenkwinkel einzuregeln.

Um mit den bekannten Verfahren ein Handmoment zu erzeugen, musste beispielsweise das durch den Momentensteller 15 bei der Bildung des Überlagungswinkels zwangsläufig erzeugte Lenkmoment von dem Winkelsteller 7 ausgeglichen werden, um dem Fahrer keine durch den Überlagungswinkel auftretende unerwünschten Momente zu übermitteln. Hierzu musste der Winkelsteller 7 das von dem Momentensteller 15 erzeugte Moment zumindest teilweise kompensieren. Bei anderen bekannten Systemen wurde der Momentensteller 15 zur Erzeugung eines Moments und der Winkelsteller 7 zur Erzeugung eines Radlenkwinkels herangezogen. Auch bei diesen bekannten Systemen arbeiten der Winkelsteller 7 und der Momentensteller 15 jedoch teilweise gegeneinander und zwar immer dann, wenn ein erzeugtes Moment durch ein Gegenmoment kompensiert werden soll.

Erfindungsgemäß wird durch den Mehrgrößenregler 20 erreicht, dass nun keine direkte Zuordnung der Steller zu einer bestimmten Aufgabe - entweder Erzeugung eines Moments oder Erzeugung eines Radlenkwinkels - notwendig ist. Vielmehr werden der Winkelsteller 7 und der Momentensteller 15 stets derart angesteuert, dass eine effiziente Nutzung der zur Verfügung stehenden Stellenergie erreicht wird, um den Soll-Radlenkwinkel und das Soll-Handmoment einzustellen.

Der Mehrgrößenregler 20 kann vorteilhafterweise in der Form

$$x_{k+1} = Ax_k + Bu_k$$

$$y_k = Cx_k + Du_k$$

beschrieben werden. Hierbei ist $x_k$ ein Vektor, der den internen Zustand des Mehrgrößenreglers 20 zu einem Zeitpunkt k beschreibt $u_k$ bezeichnet einen Vektor, der die Eingangsgrößen des Mehrgrößenreglers 20 beschreibt, wobei die Eingangsgrößen ein aktuelles Lenkmoment, ein Soll-Lenkmoment, ein aktueller Radlenkwinkel und ein Soll-Radlenkwinkel zu dem Zeitpunkt k sind. $y_k$ bezeichnet einen Vektor, der die zum Zeitpunkt k von dem Mehrgrößenregler 20 bestimmten Stellsignale für den Winkelsteller 7 und den Momentensteller 15 beschreibt. Die Stellsignale sind je nach Ausgestaltung des Lenksystems als Soll-Rotorwinkel, als Soll-Motormomente oder als Soll-Spannungen ausgeführt.

Die Parametrierung des Mehrgrößenreglers 20, also die Bestimmung der Reglermatrizen *A, B, C* und *D* werden mit Hilfe geeigneter Entwurfsmethoden für robuste Mehrgrößenregler 20 bestimmt. Die so entworfenen Mehrgrößenregler haben im Allgemeinen vollen Rang, das heißt jede Komponente des Eingangsgrößenvektors $u_k$ hat Auswirkungen auf jede Komponente des Vektors $y_k$ der vom Mehrgrößenregler 20 berechneten Stellsignale. Diese Eigenschaft ermöglicht eine Regelung des Lenkmoments und des Radlenkwinkels, die unempfindlich ist gegenüber unsicheren Parametern und die zur Regelung benötigte Stellenergie effizient nutzen kann.

Eine Untersuchung der vorbekannten Regelungskonzepte und Übertragung dieser Konzepte in die oben angegebene Matrizendarstellung, zeigt die folgende Gleichung:

$$x_{k+1} = \begin{bmatrix} A_{11} & 0 \\ 0 & A_{22} \end{bmatrix} x_k + \begin{bmatrix} B_{11} & -B_{11} & 0 & 0 \\ 0 & 0 & B_{23} & -B_{23} \end{bmatrix} u_k$$

$$y_k = \begin{bmatrix} C_{11} & 0 \\ 0 & C_{22} \end{bmatrix} x_k + \begin{bmatrix} D_{11} & -D_{11} & 0 & 0 \\ 0 & 0 & D_{23} & -D_{23} \end{bmatrix} u_k$$

Diese Gleichung zeigt deutlich, dass bekannte Regler keinen vollen Rang haben. Dies bedeutet, dass nicht jede Komponente des Vektors $u_k$ der Eingangsgrößen Auswirkungen auf jede Komponente $y_k$ der von den Reglern berechneten Stellsignale hat. Ferner verwender diese Regler lediglich eine Differenz aus Sollwerten und aktuell gemessenen Werten als Eingangswerte.

Demgegenüber ist es mittels des erfindungsgemäßen Mehrgrößenreglers 20 möglich, eine möglichst effiziente Erzeugung der Stellsignale dadurch zu gewährleisten, dass prinzipiell jede Eingangsgröße auf jede Ausgangsgröße Einfluss hat.

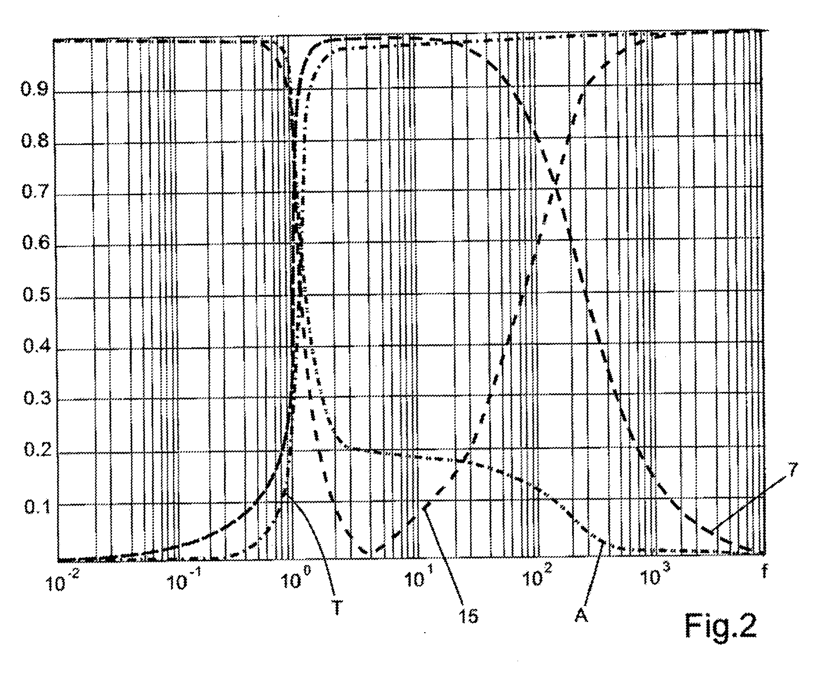

In Figur 2 sind ein Amplitudenverhältnis von Eingangsgrößen des Mehrgrößensystems und das Amplitudenverhältnis des Radlenkwinkels und des Lenkradmoments dargestellt.

Das mittels des Mehrgrößenreglers 20 zu regelnde System hat die Eigenschaft, dass in Abhängigkeit von einem Zusammenwirken der Eingangsgrößen unterschiedliche Gesamtverstärkungen der Eingangsgrößen zu den Ausgangsgrößen realisiert werden. Dabei gibt es bei jeder Frequenz ein Amplitudenverhältnis der Eingangsgrößen, das von dem Mehrgrößensystem besonders verstärkt wird und eines, das besonders gering verstärkt wird. Zu jedem dieser Amplitudenverhältnisse der Eingangsgrößen ergibt sich durch das Mehrgrößensystem ein Amplitudenverhältnis der Ausgangsgrößen. In Figur 2 sind hierzu die normierten Amplituden der Eingangsgrößenkombination mit maximaler Verstärkung bezüglich der Frequenz aufgetragen. Ferner ist das zugehörige Amplitudenverhältnis der zugehörigen Ausgangsgrößen dargestellt. Das hierbei zugrundeliegende Mehrgrößensystem ist ein beispielhaftes System, wie es in der erfindungsgemäßen Lenkung auftreten kann.

Wie Figur 2 zu entnehmen ist, ist im Bereich mit Frequenzen < 0,5 zu sehen, dass der Momentensteller 15 alleine eine maximale Auswirkung auf den Radlenkwinkel A bzw. den Summenwinkel aufweist. In einem Frequenzbereich zwischen zirka 0,5 und zirka 2 ist ein deutlicher Wechsel des Einflusses der beiden Steller zu beobachten, so dass in diesem Bereich der Momentensteller 15 seinen Einfluss auf den Radlenkwinkel A deutlich verliert. Im Frequenzbereich von zirka 2 bis 30 hat der Winkelsteller 7 fast alleine eine maximale Auswirkung auf das Handmoment T, wohingegen der Einfluss des Momentenstellers 15 auf das Handmoment T nur gering ist. Im noch höheren Frequenzbereich ist das Handmoment T am leichtesten zu beeinflussen. Der Winkelsteller 7 verliert jedoch mit zunehmender Frequenz an Effektivität und wird deshalb mehr und mehr von dem Momentensteller 15 unterstützt. Knapp oberhalb einer Grenze von zirka 100 ist schließlich der Momentensteller 15 derjenige, der fast ausschließlich das Handmoment T erzeugt, weil dieser in diesem Bereich besonders effektiv das Handmoment T erzeugen kann.

Diese Betrachtung macht deutlich, dass die bestehenden Regler mit vorgegebenen Aufgaben mit fest vorgegebenen Aufgaben für die Steller des Radlenkwinkels und des Handmoments selbst mit aufwändigen Kompensationskonzepten die Aufgabe nur unzureichend lösen.

Selbstverständlich sind eine Vielzahl weiterer Ausführungsformen der Erfindung denkbar. Beispielsweise ist es möglich, den Radlenkwinkel A bzw. den Summenwinkel mittels eines anders angeordneten Sensors zu erfassen, als dies in Figur 1 dargestellt ist. Insbesondere ist es möglich, eine Mehrzahl von Winkeln zu erfassen und daraus den Summenwinkel zu bestimmen. Analog hierzu kann der Sensor zur Erfassung des Handmoments T anders angeordnet sein bzw. in Abhängigkeit einer Mehrzahl von anderen Sensorwerten ermittelt werden. Derartige Ausgestaltungen sind dem Fachmann hinlänglich bekannt und umfassen auch Verfahren, die eine Schätzung einzelner Werte ermöglichen.

Unabhängig von derartigen Variationen wird erfindungsgemäß durch den Einsatz des Mehrgrößenreglers 20 eine feste Zuweisung von Aufgaben an die einzelnen Steller aufgehoben. Damit wird implizit eine hocheffektive Kompensationsstrategie erreicht.

## Patentansprüche

1. Verfahren zum Einstellen eines Radlenkwinkels (A) und eines Handmoments (T) bei einer Lenkung (2) für ein Fahrzeug, bei dem eine mechanische Verbindung von einem Lenkrad (10) zu gelenkten Rädern (14) besteht, und bei dem ein Soll-Radlenkwinkel und ein Soll-Handmoment vorgegeben werden und mittels eines Momentenstellers (15) und eines Winkelstellers (7) der vorgegebene Soll-Radlenkwinkel und das vorgegebene Soll-Handmoment eingeregelt werden, **dadurch gekennzeichnet, dass** der Soll-Radlenkwinkel und das Soll-Handmoment einem Mehrgrößenregler (20) zugeführt werden und das Handmoment (T) und der Radlenkwinkel (A) mittels dieses Mehrgrößenreglers (20) eingeregelt werden.

2. Verfahren nach Anspruch 1, **dadurch gekennzeichnet, dass** der Mehrgrößenregler (20) einen vollen Rang aufweist.

3. Verfahren nach einem der Ansprüche 1 oder 2, **dadurch gekennzeichnet, dass** zum Einstellen des Handmoments (T) und des Radlenkwinkels (A) Stellsignale erzeugt werden, wobei mindestens ein Stellsignal einen Rotorwinkel, ein Motormoment oder eine Spannung beschreibt.

4. Verfahren nach einem der vorangehenden Ansprüche, **dadurch gekennzeichnet, dass** der Mehrgrößenregler (20) mittels einer Gleichung der Form

$$x_{k+1} = Ax_k + Bu_k$$

$$y_k = Cx_k + Du_k$$

realisiert wird, wobei

$k$ einen Zeitpunkt beschreibt,
$x_k$ einen internen Zustand des Mehrgrößenreglers (20) mittels eines Vektors beschreibt,
$y_k$ die zu dem Zeitpunkt $k$ von dem Mehrgrößenregler (20) bestimmten Stellsignale beschreibt,
$u_k$ die Reglereingangsgrößen mittels eines Vektors beschreibt,
$A, B, C$ und $D$ Matrizen sind, mittels derer eine Parameterisierung des Mehrgrößenreglers (20) erfolgt.

5. Steuergerät (1) zur Steuerung/Regelung einer Lenkung (2) in einem Fahrzeug, wobei eine mechanische Verbindung von einem Lenkrad (10) zu gelenkten Rädern (14) besteht, wobei die Lenkung (2) einen Momentensteller (15) und einen Winkelsteller (7) aufweist und wobei das Steuergerät (1) Mittel zum Ansteuern des Momentenstellers (15) und des Winkelstellers (7) und Mittel zum Einregeln eines Handmoments (T) und eines Radlenkwinkels (A) in Abhängigkeit von einem Soll-Radlenkwinkel und einem Soll-Handmoment aufweist, **dadurch gekennzeichnet, dass** in dem Steuergerät (1) ein Mehrgrößenregler (20) ausgebildet ist, mittels dessen das Handmoment (T) und der Radlenkwinkel (A) in Abhängigkeit von dem Soll-Radlenkwinkel und dem Soll-Handmoment einregelbar sind.

6. Steuergerät (1) nach Anspruch 5, **dadurch gekennzeichnet, dass** der Mehrgrößenregler (20) vollen Rang hat

7. Steuergerät (1) nach Anspruch 5 oder 6, **dadurch gekennzeichnet, dass** das Steuergerät (1) Stellsignale zur Ansteuerung des Momentenstellers (15) und des Winkelstellers (7) bereitstellt, wobei mindestens ein Stellsignal einen Rotorwinkel, ein Motormoment oder eine Spannung beschreibt.

8. Steuergerät (1) nach einem der Ansprüche 5 bis 7, **dadurch gekennzeichnet, dass** der Mehrgrößenregler (20) einer Gleichung der Form

$$x_{k+1} = Ax_k + Bu_k$$

$$y_k = Cx_k + Du_k$$

genügt, wobei

$k$ einen Zeitpunkt beschreibt,
$x_k$ einen internen Zustand des Mehrgrößenreglers (20) mittels eines Vektors beschreibt,
$y_k$ die zu dem Zeitpunkt $k$ von dem Mehrgrößenregler (20) bestimmten Stellsignale beschreibt,
$u_k$ die Reglereingangsgrößen mittels eines Vektors beschreibt,
$A$ , $B$ , $C$ und $D$ Matrizen sind, mittels derer eine Parametrisierung des Mehrgrößenreglers (20) erfolgt.

9. Computerprogramm, das auf einem Steuergerät (1) zur Steuerung/Regelung einer Lenkung (2), insbesondere auf einem Mikroprozessor (3) in dem Steuergerät (1) ablauffähig ist, **dadurch gekennzeichnet, dass** das Computerprogramm zur Durchführung eines Verfahrens nach einem der Ansprüche 1 bis 4 programmiert ist.

10. Computerprogramm nach Anspruch 9, **dadurch gekennzeichnet, dass** das Computerprogramm auf einem Speicherelement (5) abgespeichert ist.

**Claims**

1. Method for adjusting a wheel steering angle (A) and a manual torque (T) in a steering system (2) for a vehicle, in which there is a mechanical connection between a steering wheel (10) and steered wheels (14), and in which a setpoint wheel steering angle and a setpoint manual torque are predefined and the predefined setpoint wheel steering angle and the predefined setpoint manual torque are adjusted by means of a torque adjustor (15) and an angle adjustor (7), **characterized in that** the setpoint wheel steering angle and the setpoint manual torque are fed to a multi-variable controller (20), and the manual torque (T) and the wheel steering angle (A) are adjusted by means of this multi-variable controller (20).

2. Method according to Claim 1, **characterized in that** the multi-variable controller (20) has a full rank.

3. Method according to one of Claims 1 or 2, **characterized in that** actuation signals are generated for adjusting the manual torque (T) and the wheel steering angle (A), wherein at least one actuation signal describes a rotor angle, a motor torque or a voltage.

4. Method according to one of the preceding claims, **characterized in that** the multi-variable controller (20) is implemented by means of an equation in the form

$$x_{k+1} = Ax_k + Bu_k$$

$$y_k = Cx_k + Du_k$$

wherein

$k$ describes a time,
$x_k$ describes an internal state of the multi-variable controller (20) by means of a vector,
$y_k$ describes the actuation signals which are determined by the multi-variable controller (20) at the time $k$,
$u_k$ describes the controller input variables by means of a vector, and
$A, B, C$ and $D$ are matrices by means of which parameterization of the multi-variable controller (20) takes place.

5. Control device (1) for performing open-loop/closed-loop control of a steering system (2) in a vehicle, wherein there is a mechanical connection between a steering wheel (10) and steered wheels (14), wherein the steering system (2) has a torque adjustor (15) and an angle adjustor (7), and wherein the control device (1) has means for activating the torque adjustor (15) and the angle adjustor (7) and means for adjusting a manual torque (T) and a wheel steering angle (A) as a function of a setpoint wheel steering angle and a setpoint manual torque, **characterized in that** a multi-variable controller (20) is formed in the control device (1), by means of which multi-variable controller (20) the manual torque (T) and the wheel steering angle (A) can be adjusted as a function of the setpoint wheel steering angle and the setpoint manual torque.

6. Control device (1) according to Claim 5, **characterized in that** the multi-variable controller (20) has full rank.

7. Control device (1) according to Claim 5 or 6, **characterized in that** the control device (1) makes available actuation signals for activating the torque adjustor (15) and the angle adjustor (7), wherein at least one actuation signal describes a rotor angle, a motor torque or a voltage.

8. Control device (1) according to one of Claims 5 to 7, **characterized in that** the multi-variable controller (20) satisfies an equation in the form

$$x_{k+1} = Ax_k + Bu_k$$

$$y_k = Cx_k + Du_k$$

wherein

$k$ describes a time,
$x_k$ describes an internal state of the multi-variable controller (20) by means of a vector,
$y_k$ describes the actuation signals which are determined by the multi-variable controller (20) at the time $k$,
$u_k$ describes the controller input variables by means of a vector, and
$A, B, C$ and $D$ are matrices by means of which parameterization of the multi-variable controller (20) takes place.

9. Computer program which can run on a control device (1) for performing open-loop/closed-loop control of a steering system (10), in particular on a microprocessor (3), in the control device (1), **characterized in that** the computer program is programmed to carry out a method according to one of Claims 1 to 4.

10. Computer program according to Claim 9, **characterized in that** the computer program is stored on a memory element (5).

**Revendications**

1. Procédé de réglage de l'angle (A) du volant et du couple manuel (T) d'une direction (2) de véhicule,
dans lequel une liaison mécanique existe entre le volant (10) et les roues directrices (14) et

dans lequel un angle de consigne de volant et un couple manuel de consigne sont prédéterminés et l'angle de consigne de volant et le couple manuel de consigne prédéterminé sont régulés au moyen d'un régleur de couple (15) et d'un régleur d'angle (7),

**caractérisé en ce que**

l'angle de consigne de volant et le couple manuel de consigne sont apportés à un régulateur (20) à plusieurs grandeurs et le couple manuel (T) et

**en ce que** l'angle de volant (A) sont régulés au moyen de ce régulateur (20) à plusieurs grandeurs.

2. Procédé selon la revendication 1, **caractérisé en ce que** le régulateur (20) à plusieurs grandeurs présente une plage complète.

3. Procédé selon l'une des revendications 1 ou 2, **caractérisé en ce que** des signaux de réglage sont formés pour régler le couple manuel (T) et l'angle de volant (A) et **en ce qu'**au moins un signal de réglage décrit un angle de rotor, un couple moteur ou une tension.

4. Procédé selon l'une des revendications précédentes, **caractérisé en ce que** le régulateur (20) à plusieurs grandeurs est réalisé au moyen d'une équation de forme :

$$x_{k+1} = Ax_k + Bu_k$$

$$y_k = Cx_k + Du_k$$

dans laquelle

$k$ décrit un instant,
$X_k$ décrit par un vecteur l'état interne du régulateur (20) à plusieurs grandeurs,
$y_k$ décrit les signaux de réglage définis à l'instant $k$ par le régulateur (20) à plusieurs grandeurs,
$u_k$ décrit par un vecteur les grandeurs d'entrée du régulateur et
$A, B, C$ et $D$ sont des matrices qui permettent de réaliser la paramétrisation du régulateur (20) à plusieurs grandeurs.

5. Appareil de commande (1) pour la commande et/ou la régulation de la direction (2) d'un véhicule, dans lequel une liaison mécanique existe entre un volant (10) et des roues directrices (14), le volant (10) présentant un régleur de couple (15) et un régleur d'angle (7) et l'appareil de commande (1) présentant des moyens de commande du régleur de couple (15) et du régleur d'angle (7) et des moyens de régulation du couple manuel (T) et de l'angle de volant (A) en fonction d'un angle de volant de consigne et d'un couple manuel de consigne,

**caractérisé en ce que**

un régulateur (20) à plusieurs grandeurs est réalisé dans l'appareil de commande (1) et permet de réguler le couple manuel (T) et l'angle de volant (A) en fonction de l'angle de volant de consigne et du couple manuel de consigne.

6. Appareil de commande (1) selon la revendication 5, **caractérisé en ce que** le régulateur (20) à plusieurs grandeurs présente une plage complète.

7. Appareil de commande (1) selon les revendications 5 ou 6, **caractérisé en ce que** l'appareil de commande (1) délivre des signaux de réglage permettant de commander le régleur de couple (15) et le régleur d'angle (7) et **en ce qu'**au moins un signal de réglage décrit un angle de rotor, un couple moteur ou une tension.

8. Appareil de commande (1) selon l'une des revendications 5 à 7, **caractérisé en ce que** le régulateur (20) à plusieurs grandeurs satisfait à une équation de la forme :

$$x_{k+1} = Ax_k + Bu_k$$

$$y_k = Cx_k + Du_k$$

dans laquelle

$k$ décrit un instant,

$X_k$ décrit par un vecteur l'état interne du régulateur (20) à plusieurs grandeurs,

$y_k$ décrit les signaux de réglage définis à l'instant $k$ par le régulateur (20) à plusieurs grandeurs,

$u_k$ décrit par un vecteur les grandeurs d'entrée du régulateur et

$A, B, C$ et $D$ sont des matrices qui permettent de réaliser la paramétrisation du régulateur (20) à plusieurs grandeurs.

9. Programme informatique apte à être exécuté sur un appareil de commande (1) pour la commande et/ou la régulation d'une direction (2) et en particulier sur un microprocesseur (3) de l'appareil de commande (1), **caractérisé en ce que** le programme informatique est programmé pour mettre en oeuvre un procédé selon l'une des revendications 1 à 4.

10. Programme informatique selon la revendication 9, **caractérisé en ce que** le programme informatique peut être conservé en mémoire sur un élément de mémoire (5).

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060122751 A1
- EP 1568577 A2
- WO 2006018027 A2
- WO 2008041668 A1